# FASCICULE DE BREVET EUROPEEN

(11) **EP 0 655 755 B1**
(45) Date de publication et mention de la délivrance du brevet: **25.06.1997**
(21) Numéro de dépôt: 94410106.2
(22) Date de dépôt: 25.11.1994
(51) Int. Cl.: H01G 2/10, H01G 2/14

(54) **Condensateur de puissance**
Leistungskondensator
Power capacitor

(30) Priorité: 30.11.1993 FR 9314431
(43) Date de publication de la demande: 31.05.1995
(73) Titulaire: SCHNEIDER ELECTRIC SA, 92100 Boulogne Billancourt (FR)
(72) Inventeur: Sebillotte, Eric, F-38050 Grenoble Cedex 09 (FR); Theoleyre, Serge, F-38050 Grenoble Cedex 09 (FR)
(74) Mandataire: Jouvray, Marie-Andrée

(56) Documents cités:
- DE-A- 3 337 938
- DE-C- 4 302 420

## Description

L'invention concerne un condensateur de puissance comportant un dispositif de surpression, sensible à un dégagement gazeux, et au moins un enroulement capacitif enrobé dans une résine polymérisable coulée dans un boîtier.

Un condensateur électrique de puissance basse tension est généralement réalisé à partir d'enroulements capacitifs constitués par un bobinage de films diélectriques métallisés. Dans un condensateur à autocicatrisation, en cas de défaut interne entraînant la perforation de l'isolant, l'énergie dissipée vaporise instantanément le dépôt métallique à l'endroit de la perforation. Ceci rétablit l'isolement à cet endroit et supprime ainsi le défaut.

Afin de protéger la couche métallique des agressions du milieu environnant, les bobinages sont noyés dans une résine polymérisable. Pour cela, on place un ou plusieurs enroulements dans un boîtier dont les dimensions internes sont supérieures à celles de l'enroulement, et une résine polymérisable est coulée dans l'espace libre entre l'enroulement et le boîtier.

Dans certains cas, notamment en cas de surcharges, de surtensions ou en fin de vie du bobinage, l'autocicatrisation ne se fait pas. La zone en défaut dans le film diélectrique n'étant plus isolée électriquement, le défaut dans le bobinage se développe très rapidement. Le dégagement de chaleur est tel que l'on observe la fusion du film diélectrique, puis l'ébullition avec création importante de gaz. La pression interne dans le boîtier augmente.

Le brevet français 2.174.904 utilise le dégagement gazeux produit en cas de surtension pour créer une pression qui augmente le seuil d'apparition des décharges non autocicatrisantes. Dans ce but une résine plastique, polymérisant lentement et imperméable aux gaz, est coulée directement dans un boîtier en matière plastique. Il est ainsi possible d'augmenter les tensions supportables par le condensateur.

Ce document ne permet cependant pas d'éliminer tout risque d'explosion du condensateur, notamment en fin de vie du condensateur.

Pour éviter l'explosion du boîtier contenant l'enroulement capacitif, il est connu de déconnecter électriquement le bobinage dès que la pression interne dépasse une certaine limite fixée par la résistance mécanique du boîtier. Pour cela, on utilise la pression des gaz pour actionner un système mécanique appelé surpresseur permettant de rompre ou de court-circuiter circuiter l'alimentation électrique du bobinage. Dans les dispositifs connus les gaz traversent la résine enrobant le bobinage et doivent cheminer jusqu'au surpresseur.

Toute la difficulté réside dans l'obtention d'un cheminement fiable et efficace quelle que soit la cinétique d'augmentation de pression. En effet, suivant la façon dont le défaut dans le bobinage se développe, on peut avoir une augmentation de pression très rapide, s'apparentant à une explosion, ou avoir peu de gaz émis, mais beaucoup de matériau diélectrique fondu. Dans ce dernier cas il faut un cheminement qui supporte la température élevée du diélectrique fondu pendant plusieurs minutes, le temps que la pression atteigne la valeur nécessaire au fonctionnement du surpresseur. Pour répondre à cette difficulté, plusieurs solutions existent actuellement, avec leurs avantages et leurs inconvénients.

Dans certains cas le boîtier du condensateur est métallique, généralement en aluminium. Le boîtier résiste alors très bien à la température. n est ininflammable. La malléabilité du matériau permet d'obtenir un surpresseur à faible coût, par la réalisation d'un ou plusieurs plis extensibles dans la partie supérieure du boîtier. Un inconvénient important du boîtier métallique est qu'il est conducteur électrique. Ceci nécessite une isolation électrique entre le boîtier d'une part, et le bobinage et les connexions électriques d'autre part. Cette isolation est généralement réalisée par une enveloppe interne en matière plastique. On laisse de plus généralement un espace libre entre cette enveloppe et le boîtier pour le cheminement des gaz. De plus le boîtier du condensateur doit être raccordé au circuit de masse de l'installation électrique.

Dans le document EP-A-11347, le boîtier en aluminium est muni d'un pli extensible, une pièce auxiliaire en polyamide, qui n'adhère que faiblement à la résine, étant disposée dans le boîtier, entre le pli extensible et le fond du boîtier, et servant d'ancrage à l'une des connexions électriques du condensateur.

Il existe également des condensateurs dont le boîtier est en matière plastique. Dans ce cas, on ne rencontre pas de problème d'isolation électrique. L'utilisation d'un boîtier en matière plastique est notamment décrite dans le document DE-A-3337938 pour un petit condensateur d'enroulement. Ce document mentionne notamment la possibilité d'utiliser un boitîer en polyphénylène oxyde modifié. Des boitîers en matière plastique ont également été utilisés pour des condensateurs de puissance comportant un dispositif de surpression.Un inconvénient du boîtier plastique est que, compte tenu de sa faible tenue en température, il faut impérativement ménager un espace entre la résine et la face interne du boîtier pour le cheminement des gaz et du matériau diélectrique fondu. Cet espace peut être réalisé en recouvrant la face interne du boîtier par une mousse peu dense à cellules fermées. Les gaz chauds en fondant cette mousse se créent un cheminement facile jusqu'au surpresseur. On peut aussi disposer le bobinage enrobé de résine dans une enveloppe intermédiaire en matière plastique facilement fusible. La face externe de cette enveloppe comporte, par exemple, des ailettes qui ménagent un espace libre entre l'enveloppe intermédiaire et la face interne du boîtier. Un autre inconvénient des matières plastiques est leur inflammabilité.

Ainsi, dans l'état actuel de la technologie, quel que soit le matériau du boîtier, les mesures prises pour assurer le cheminement du gaz compliquent la fabrication du condensateur de puissance et conduisent à une augmentation de volume du condensateur, qu'il s'agisse de laisser à l'intérieur du boîtier, généralement sur sa face interne, un espace libre ou un espace provisoirement fermé. Ces deux inconvénients ont un impact non négligeable en terme de coût de fabrication.

Le but de la présente invention est de réaliser un condensateur ne présentant pas les inconvénients précités.

Un condensateur de puissance selon l'invention comporte un boîtier en matière plastique. Le ou les enroulements capacitifs sont disposés dans le boîtier et une résine polymérisable, destinée à enrober le ou les enroulements, est coulée directement dans le boîtier, sans nécessiter d'opération intermédiaire. Il est inutile de prévoir un espace entre la résine d'enrobage et la face interne du boîtier pour le passage des gaz vers un dispositif de coupure en cas de surpression.

Pour cela le boîtier est réalisé en une matière plastique qui possède des propriétés mécaniques et de tenue en température lui permettant de supporter les efforts mécaniques et l'élévation de température dus au passage des gaz et du matériau diélectrique fondu, quelle que soit la cinétique d'augmentation de pression à l'intérieur du boîtier. Suivant la présente invention, ce but est atteint en choisissant une matière plastique qui a simultanément les propriétés suivantes :
- Une ténacité mécanique telle que, mesurée par un essai de traction réalisé sur une éprouvette et un mode opératoire conformes à la norme ISO 527 avec une vitesse d'allongement de l'éprouvette de 50 mm par minute, à 23 °C, la contrainte de traction à la limite élastique soit comprise entre 60 et 80 Mpa, l'allongement relatif à la limite élastique soit compris entre 4 et 10 %, la contrainte de traction à la rupture soit comprise entre 50 et 80 Mpa, et l'allongement à la rupture soit supérieur à 5 %.
- Une tenue au choc caractérisée d'une part, suivant un essai IZOD réalisé sur une éprouvette entaillée et suivant un mode opératoire conformes à la norme ISO 180-1A à une température de 23 °C, par une énergie absorbée supérieure à 17 kJ/m2, et d'autre part caractérisée, suivant un essai CHARPY réalisé sur une éprouvette entaillée et suivant un mode opératoire conformes à la norme ISO 179, par une énergie absorbée supérieure à 15 kJ/m2.
- Une tenue thermique caractérisée d'une part, suivant un essai VICAT B, où la force appliquée est de 50 N, réalisé sur une éprouvette et suivant un mode opératoire conformes à la norme ISO 306, pour une vitesse de montée en température de 50 °C par heure, par un point dit VICAT B 50 supérieur à 140 °C, et caractérisée d'autre part, suivant un essai HDT (Heat Deflection Temperature) réalisé sur une éprouvette et suivant un mode opératoire conformes à la norme ISO 75, sous une contrainte appliquée de 1,8 Mpa, par une température dite HDT/A supérieure à 120 °C.

Un tel matériau se déforme en cas de surpression, permettant ainsi le cheminement des gaz le long de la paroi interne du boîtier, légèrement dilatée.

Selon un développement de l'invention, la matière plastique utilisée a, de préférence, des propriétés d'inflammabilité et d'autoextinction, telles que, mesurées suivant la norme UL 94, la matière soit classée 5 VA sur une épaisseur de 2 mm.

L'obtention simultanée pour une matière plastique des propriétés ci-dessus n'est pas aisée. Cependant, certains polymères dits techniques notamment, répondent à cette définition.

Ces polymères appartiennent notamment aux familles suivantes :
- Le polyphénylène oxyde (PPO), aussi appelé polyphénylène éther (PPE). Le polyphénylène oxyde (PPO) peut être modifié. Il peut par exemple avantageusement contenir en mélange ou en alliage des fractions de polyamide (PA) et/ou de polystyrène (PS) et/ou de butadiène (B) et/ou de styrène-butadiène (S/B).
- Le polycarbonate (PC) seul, ou qui peut aussi avantageusement contenir en alliage ou en mélange des fractions d'acrylonitrile -butadiène -styrène (ABS).

A titre d'exemple non limitatif, un mode de réalisation particulier de l'invention comporte un boîtier de condensateur cylindrique, ayant une paroi de 2 mm d'épaisseur et un fond de 3 mm d'épaisseur, réalisé à partir d'une matière plastique de type "NORYL VO 150B" élaborée et commercialisée par la Société GENERAL ELECTRIC PLASTICS.
Le matériau utilisé est un polyphénylène oxyde (PPO) modifié par une addition de polystyrène (PS). Il remplit toutes les conditions précitées puisque dans les conditions d'essais mentionnées ci-dessus, il a les caractéristiques suivantes :
- En traction, la contrainte à la limite élastique vaut 65 Mpa pour un allongement de 4 %, et une contrainte à la rupture de 55 Mpa et un allongement de 5,5 %.
- La résistance au choc IZOD sur éprouvette entaillée vaut 18 kJ/m2, et la résistance au choc CHARPY sur éprouvette entaillée vaut 16 kJ/m2.
- Une tenue thermique caractérisée par un point VICAT B 50 de 145 °C et une température HDT/A de 125 °C.
- Une autoextinguibilité classée 5 VA sur 2 mm suivant la norme UL 94.

## Revendications

1. Condensateur de puissance comportant un dispositif de surpression, sensible à un dégagement gazeux, et au moins un enroulement capacitif enrobé dans une résine polymérisable coulée dans un boîtier, condensateur caractérisé en ce que le boîtier est réalisé en une matière plastique possédant, en combinaison, les propriétés suivantes :
**a)** une ténacité mécanique telle que, mesurée par un essai de traction réalisé sur une éprouvette et un mode opératoire conformes à la norme ISO 527 avec une vitesse d'allongement de l'éprouvette de 50 mm par minute, à 23 °C, la contrainte de traction à la limite élastique soit comprise entre 60 et 80 Mpa, l'allongement relatif à la limite élastique soit compris entre 4 et 10 %, la contrainte de traction à la rupture soit comprise entre 50 et 80 Mpa, et l'allongement à la rupture soit supérieur à 5 % ;
**b)** une tenue au choc caractérisée d'une part, suivant un essai IZOD réalisé sur une éprouvette entaillée et suivant un mode opératoire conformes à la norme ISO 180-1A, à une température de 23 °C, par une énergie absorbée supérieure à 17 kJ/m2, et d'autre part caractérisée, suivant un essai CHARPY réalisé sur une éprouvette entaillée et suivant un mode opératoire conformes à la norme ISO 179, par une énergie absorbée supérieure à 15 kJ/m2 ;
**c)** une tenue thermique caractérisée d'une part, suivant un essai VICAT B, où la force appliquée est de 50 N, réalisé sur une éprouvette et suivant un mode opératoire conformes à la norme ISO 306, pour une vitesse de montée en température de 50 °C par heure, par un point dit VICAT B 50 supérieur à 140 °C, et caractérisée d'autre part, suivant un essai HDT réalisé sur une éprouvette et suivant un mode opératoire conformes à la norme ISO 75, sous une contrainte appliquée de 1,8 Mpa, par une température dite HDT/A supérieure à 120 °C.

2. Condensateur selon la revendication 1, caractérisé en ce que la matière plastique utilisée a des propriétés d'inflammabilité et d'autoextinction telles que, mesurées suivant la norme UL 94, la matière soit classée 5 VA sur une épaisseur de 2 mm.

3. Condensateur selon l'une des revendications 1 et 2, caractérisé en ce que la matière plastique est un polyphénylène oxyde.

4. Condensateur selon la revendication 3, caractérisé en ce que la matière plastique est un polyphénylène oxyde modifié.

5. Condensateur selon la revendication 4, caractérisé en ce que la matière plastique est un polyphénylène oxyde modifié en y incorporant, par mélange ou par alliage, des fractions de polyamide et/ou de polystyrène et/ou de butadiène et/ou de styrène-butadiène.

6. Condensateur selon l'une des revendications 1 et 2, caractérisé en ce que la matière plastique est un polycarbonate.

7. Condensateur selon la revendication 6, caractérisé en ce que la matière plastique est un polycarbonate comportant en alliage ou en mélange des fractions d'acryclonitrile - butadiène - styrène.

## Patentansprüche

1. Leistungskondensator mit einer, auf Gasentwicklung ansprechenden Überdruck-Abschaltsicherung und mindestens einem Kondensatorwickel, der von einem, in ein Gehäuse gegossenen, polymerisierbaren Harz umgeben ist, dadurch gekennzeichnet, daß das Gehäuse aus einem Kunststoffbesteht, der folgende Eigenschaften in sich vereint:
a) mechanische Festigkeit, ermittelt durch Zugversuch mit einer Probe und einem Versuchsablauf entsprechend ISO 527 mit einer Dehnungsgeschwindigkeit der Probe von 50 mm pro Minute, bei 23 °C, derart, daß die Streckspannung zwischen 60 und 80 Mpa, die relative Streckdehnung zwischen 4 und 10 %, die Reißspannung zwischen 50 und 80 Mpa und die Reißdehnung mehr als 5% betragen,
b) Kerbschlagzähigkeit, zum einen gekennzeichnet durch eine verbrauchte Arbeit von mehr als 17 kJ/m², ermittelt in einem IZOD-Versuch mit einer gekerbten Probe und einem Versuchsablauf entsprechend ISO 180-1A bei einer Temperatur von 23 °C und zum anderen durch eine verbrauchte Arbeit von mehr als 15 kJ/m², ermittelt in einem CHARPY-Versuch mit einer gekerbten Probe und einem Versuch entsprechend ISO 179,
c) thermische Festigkeit, zum einen gekennzeichnet durch einen sogenannten VICAT-B-50-Punkt von mehr als 140 °C, ermittelt in einem VICAT-B-Versuch bei einer aufgebrachten Kraft von 50 N mit einer Probe und einem Versuchsablauf entsprechend ISO 306 bei einer Temperatur-Anstiegsgeschwindigkeit von 50 °C/Stunde, und zum anderen durch eine sogenannte HDT/A-Temperatur von mehr als 120 °C, ermittelt in einem HDT-Versuch (Heat Deflection Temperature) mit einer Probe und einem Versuchsablauf entsprechend ISO 75 bei einer Belastung von 1,8 Mpa.

2. Kondensator nach Anspruch 1, dadurch gekennzeichnet, daß der verwendete Kunststoff solche Entflammbarkeits- und Selbstverlöschungseigenschaften aufweist, daß der Stoff gemäß Norm UL 94 in die Klasse 5 VA bei einer Dicke von 2 mm eingestuft wird.

3. Kondensator nach Anspruch 1 und 2, dadurch gekennzeichnet, daß der verwendete Kunststoff ein Polyphenylenoxid ist.

4. Kondensator nach Anspruch 3, dadurch gekennzeichnet, daß der verwendete Kunststoff ein modifiziertes Polyphenylenoxid ist.

5. Kondensator nach Anspruch 4, dadurch gekennzeichnet, daß der Kunststoff ein modifiziertes Polyphenylenoxid ist, welches durch Zugabe geringer Mengen von Polyamid und/oder Polystyrol und/oder Butadien und/oder Styrol/Butadien zu einem Misch- oder Verbundmaterial ausgebildet ist.

6. Kondensator nach Anspruch 1 und 2, dadurch gekennzeichnet, daß der Kunststoff ein Polycarbonat ist.

7. Kondensator nach Anspruch 6, dadurch gekennzeichnet, daß der Kunststoff ein Polycarbonat ist, das durch Beigabe geringer Mengen von Acrylnitril/Butadien/Styrol zu einem Misch- oder Verbundmaterial ausgebildet ist.

## Claims

1. A power capacitor comprising an overpressure device, sensitive to a gas release, and at least one capacitive winding coated in a polymerizable resin cast in a case, a capacitor characterized in that the case is made of a plastic material having, in combination, the following properties :
a) a mechanical strength such that, measured by a tensile test carried out on a test bar and according to an operating mode in compliance with the ISO 527 standard with an elongation rate of the bar of 50 mm per minute, at 23°C, the tensile stress at the elastic limit is comprised between 60 and 80 Mpa, the relative elongation at the elastic limit is comprised between 4 and 10 %, the tensile breaking strength is comprised between 50 and 80 Mpa, and the breaking elongation is greater than 5 % ;
b) an impact strength characterized on the one hand, according to an IZOD test carried out on a notched test bar and according to an operating mode in compliance with the ISO 180-1A standard, at a temperature of 23°C, by an absorbed energy greater than 17 kJ/m², and on the other hand characterized, according to a CHARPY test carried out on a notched test bar and according to an operating mode in compliance with the ISO 179 standard, by an absorbed energy greater than 15 kJ/m² ;
c) a thermal resistance characterized on the one hand, according to a VICAT B test, where the force applied is 50 N, carried out on a test bar and according to an operating mode in compliance with the ISO 306 standard, for a temperature increase rate of 50°C per hour, by a point called VICAT B 50 greater than 140°C, and characterized on the other hand, according to an HDT test carried out on a test bar and according to an operating mode in compliance with the ISO 75 standard, under an applied stress of 1.8 Mpa, by a temperature called HDT/A greater than 120°C.

2. The capacitor according to claim 1, characterized in that the plastic material used has uninflammability and self-extinguishing properties such that, measured according to the UL 94 standard, the material is classified 5 VA over a thickness of 2 mm.

3. The capacitor according to claim 1 or 2, characterized in that the plastic material is a polyphenylene oxide.

4. The capacitor according to claim 3, characterized in that the plastic material is a modified polyphenylene oxide.

5. The capacitor according to claim 4, characterized in that the plastic material is a polyphenylene oxide modified by incorporating therein, by mixture or alloying, fractions of polyamide and/or polystyrene and/or butadiene and/or styrene-butadiene.

6. The capacitor according to one of the claims 1 and 2, characterized in that the plastic material is a polycarbonate.

7. The capacitor according to claim 6, characterized in that the plastic material is a polycarbonate comprising in alloy or mixture fractions of acrylonitrile - butadiene - styrene.
